# EUROPEAN PATENT SPECIFICATION

(11) **EP 3 979 574 B1**
(45) Date of publication and mention of the grant of the patent: **26.04.2023**
(21) Application number: 20819464.7
(22) Date of filing: 01.04.2020
(51) Int. Cl.: H04L 45/00, H04L 45/64

(54) **METHOD AND DEVICE FOR IMPLEMENTING REROUTING**
VERFAHREN UND VORRICHTUNG ZUR UMLEITUNGSIMPLEMENTIERUNG
PROCÉDÉ ET DISPOSITIF DE MISE EN OEUVRE DE REROUTAGE

(30) Priority: 03.06.2019 CN 201910476716
(43) Date of publication of application: 06.04.2022
(73) Proprietor: ZTE Corporation, Shenzhen, Guangdong Province 518057 (CN)
(72) Inventor: QIAN, Shaozheng, Shenzhen, Guangdong Province 518057 (CN); LU, Qianchun, Shenzhen, Guangdong Province 518057 (CN); ZHANG, Zuhong, Shenzhen, Guangdong Province 518057 (CN); ZHANG, Tianxiang, Shenzhen, Guangdong Province 518057 (CN)
(74) Representative: Gevers Patents
(86) International application number: PCT/CN2020/082819
(87) International publication number: WO 2020/244299

(56) References cited:
- CN-A- 106 549 865
- FU YONGHONG ET AL: "A Hybrid Hierarchical Control Plane for Flow-Based Large-Scale Software-Defined Networks", IEEE TRANSACTIONS ON NETWORK AND SERVICE MANAGEMENT, IEEE, US, vol. 12, no. 2, 1 June 2015 (2015-06-01), pages 117-131, XP011584728, ISSN: 1932-4537, DOI: 10.1109/TNSM.2015.2434612 [retrieved on 2015-06-15]
- TOMOVIC S ET AL: "A new traffic engineering approach for QoS provisioning and failure recovery in SDN-based ISP networks", 2018 23RD INTERNATIONAL SCIENTIFIC-PROFESSIONAL CONFERENCE ON INFORMATION TECHNOLOGY (IT), IEEE, 19 February 2018 (2018-02-19), pages 1-4, XP033337328, DOI: 10.1109/SPIT.2018.8350854 [retrieved on 2018-04-26]

## Description

### TECHNICAL FIELD

Embodiments of the present disclosure relate to the field of software defined network (SDN), in particular to a method and a device for implementing rerouting.

### BACKGROUND

Rerouting is an important module in a SDN controller. It is an important responsibility of SDN controller to keep services online and quickly restore the services without traffic disruption after an unavoidable fault occurs in the equipment in the network. In particular, when the fault is of a large scale, it is particularly important to ensure that switching to new paths is completed in a short time for a large number of services.

A single rerouting refers to a single path calculation. At present, Dijkstra algorithm, KSP algorithm and advanced genetic algorithm based on heuristics, such as ant colony algorithm and genetic algorithm are mature in path calculation. These algorithms basically satisfy requirements of the path calculation for various network service requests. However, for a fast path calculation in large scale, the above-mentioned algorithms are weak in parallel reservation of resources, resulting in slow rerouting.

D1 (XP11584728A) discloses Orion, a hybrid hierarchical control plane for large-scale networks. Orion can effectively reduce the computational complexity of an SDN control plane by several orders of magnitude. An abstracted hierarchical routing method is also designed to solve the path stretch problem. Furthermore, D1 discloses a hierarchical fast reroute method to illustrate how to achieve fast rerouting in the proposed hybrid hierarchical control plane. Orion is implemented to verify the feasibility of the hybrid hierarchical approach. Finally, the effectiveness of Orion from both the theoretical and experimental aspects is verified.

D2 (XP33337328A) discloses a new SDN (Software Defined Networking) controller design that jointly addresses the problems of optimal traffic engineering (TE), quality of service (QoS) provisioning and failure recovery in ISP (Internet Service Provider) networks. The control logic of the controller is divided into the offline and online component. The online component handles dynamic arrivals of users' requests in accordance with Service Level Agreements (SEAs). The offline component is responsible for periodic optimization of traffic distribution in the network. The goal of such architecture is to increase acceptance ratio for QoS requests and minimize degradation of background (best-effort) traffic in a scalable manner. The simulation study has shown that the proposed solution outperforms the competitive one, which is commonly used in MPLS-based ISP networks, even when TE optimization is repeated after relatively long time intervals. This alleviates concerns regarding the scalability of the SDN control plane in largescale ISP networks.

D3 (CN106549865A) discloses a method, apparatus, and software-defined network SDN controller for dynamic recovery of services. The method is applied to a software defined network SDN controller and comprises: obtaining instructions for a service outage in a transport network, determining a service list of services affected by the service outage; using a pre-constructed plurality of service recovery threads and performing a service path recovery calculation for the services in the service list based on a pre-constructed plurality of copies of first service data required for service recovery, and completing a service path recovery of a business. The business dynamic recovery of D3 has high efficiency and ensures that the business recovery time is within the required range to achieve the purpose of fast recovery.

### SUMMARY

The subject matter of the present invention is set out in appended set of claims. Although the invention is only defined by the claims, the below embodiments, examples and aspects are present for aiding in understanding the background and advantages of the invention.

### BRIEF DESCRIPTION OF THE DRAWINGS

The accompanying drawings are used to provide a further understanding of the technical solution of the present disclosure, and constitute a part of the specification. Together with the embodiments of the present disclosure, the accompanying drawings are used to explain the technical solution of the present disclosure, and do not constitute a limitation to the technical solution of the present disclosure.
FIG. 1 is a flowchart of a method for implementing rerouting according to an embodiment of the present disclosure.
FIG. 2 is a flowchart of a method for implementing rerouting according to another embodiment of the present disclosure.
FIG. 3 is a flowchart of a method for implementing rerouting according to another embodiment of the present disclosure.
FIG. 4 is a network topology diagram according to an embodiment of the present disclosure.
FIG. 5 is a flowchart of determining a next hop according to an embodiment of the present disclosure.
FIG. 6 is a flowchart of a method for implementing rerouting according to another embodiment of the present disclosure.
FIG. 7 is a flowchart of a method for implementing rerouting according to another embodiment of the present disclosure.
FIG. 8 is a network topology diagram according to an embodiment of the present disclosure.
FIG. 9 is a schematic structural diagram of a device for implementing rerouting according to an embodiment of the present disclosure.
FIG. 10 is a schematic structural diagram of a device for implementing rerouting according to another embodiment of the present disclosure.

### DETAILED DESCRIPTION

In order to make the purpose, the technical solution, and the advantages of the present disclosure clearer, embodiments of the present disclosure will be described in detail below with reference to the accompanying drawings. It should be noted that the embodiments in the present disclosure and the features in the embodiments may be combined with each other arbitrarily in a condition without conflict.

The operations shown in the flowchart of the accompanying drawings may be performed in a computer system storing a set of computer-executable instructions. And, although a logical sequence is shown in the flowchart, in some cases, the operations shown or described may be performed in an order other than that described herein.

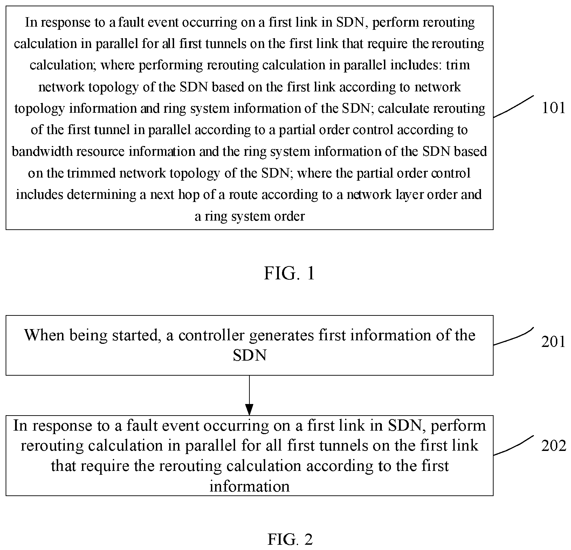

FIG. 1 is a flow chart of a method for implementing rerouting according to an embodiment of the present disclosure. The method is applicable to a software defined network (SDN) controller. As shown in FIG. 1, the method includes the following operations.

In 101, in response to a fault event occurring on a first link in SDN, rerouting calculation is performed in parallel for all first tunnels on the first link that require the rerouting calculation.

Herein, the operation of performing rerouting calculation in parallel includes: trimming network topology of the SDN based on the first link according to network topology information and ring system information of the SDN; and calculating rerouting of the first tunnel in parallel according to a partial order control according to bandwidth resource information and the ring system information of the SDN based on the trimmed network topology of the SDN.

Herein, the partial order control includes determining a next hop of a route according to a network layer order and a ring system order.

In some examples, before the fault event occurring on the first link in the SDN, the method further includes: in response to the SDN controller being started, generating and saving the network topology information, link-tunnel correspondence information, the bandwidth resource information, and the ring system information of the SDN.

In some examples, the network topology information includes information of links and connection ports between all SDN devices in the SDN. The link-tunnel correspondence information includes the number and status of tunnels corresponding to each of the links in the SDN. The bandwidth resource information includes bandwidth resource usage and tunnel resource reservation of all links in the SDN. The ring system information includes a ring system progressive relationship and a network layer to which each SDN device in ring systems including all SDN devices in the SDN belongs. The ring system progressive relationship includes a mapping relationship from the SDN devices to the ring systems, a mapping relationship from the links to the ring systems, a mapping relationship from the devices to the network layers and a progressive relationship between rings, the network layers includes, in ascending order, an access edge, an access layer, a convergence-access layer, a convergence layer, a core convergence layer, a core layer, a core edge, a provincial trunk and a national trunk.

In some examples, before rerouting calculation is performed in parallel for all first tunnels on the first link that require the rerouting calculation, the method further includes: determining all first tunnels on the first link that require rerouting calculation according to the number and status of tunnels corresponding to each of the links in the SDN.

In some examples, the operation of trimming network topology of the SDN based on the first link according to the network topology information and the ring system information of the SDN includes: determining a first ring system to which a start SDN device and a destination SDN device of the first link each belongs and all parent ring systems to which the first ring system progresses according to the ring system progressive relationship to which each SDN device belongs, cutting off a part of the network topology except the first ring system and the all parent ring systems, and generating the trimmed network topology of the SDN.

In some examples, the operation of calculating rerouting of the first tunnel in parallel according to the partial order control according to the bandwidth resource information and the ring system information of the SDN includes: according to the first ring system and the all the parent ring systems to which the first ring system progresses, the network layers of the SDN devices, and bandwidth resource usage and tunnel resource reservation of links in the trimmed network topology of the SDN, determining all next hops from the start SDN device to the destination SDN device using a depth first search according to the network layer order and the ring system order, and calculating and generating the rerouting of the first tunnel.

Herein, the ring system order includes preferentially determining SDN devices in the same ring system as the start SDN device and the destination SDN device as next hops.

Herein, the network layer order includes preferentially determining SDN devices for appropriate network layers as next hops according to distal or proximal relative positions in consideration of a network layer of the start SDN device and a network layer of the destination SDN device.

In some examples, the method further includes: detecting bandwidth resource adequacy of devices for the next hops in real time when determining the next hops, and attempting reservation of an amount of bandwidth resource required by the first tunnel; in response to the reservation succeeding, successfully determining the next hops until the destination SDN device; and in response to the reservation failing, redetermining the next hops according to the network layer order, and in response to failing to determine the next hops from a previous network layer, determining the next hops from a next network layer until the destination SDN device.

In some examples, the method further includes: in response to failing to find the next hops during calculating the rerouting of the first tunnel, performing the de-bandwidth supplementary calculation.

Herein, the operation of performing de-bandwidth supplementary calculation includes: determining the next hops using the depth first search directly according to the network layer order and the ring system order with no longer consideration of the bandwidth resource usage and tunnel resource reservation of the links in the SDN.

In some examples, before the fault event occurring on the first link in the SDN, the method further includes: caching and updating in real time a tunnel routing table for each of links in the SDN, where the tunnel routing table stores rerouting of each of the links from a start SDN device to a destination SDN device.

Herein in response to the fault event occurring on the first link in the SDN, the method further includes: querying whether the rerouting of the first tunnel is cached in the cached tunnel routing table; in response to the rerouting of the first tunnel being cached in the cached tunnel routing table, directly using the cached rerouting of the first tunnel as the rerouting of the first tunnel; and in response to no rerouting of the first tunnel being cached in the cached tunnel routing table, reperforming rerouting calculation in parallel for all first tunnels on the first link that require the rerouting calculation.

FIG. 2 is a flow chart of a method for implementing rerouting according to another embodiment of the present disclosure.

In 201, when being started, a controller generates first information of the SDN.

Herein, the first information includes network topology information, link-tunnel correspondence information, bandwidth resource information, and ring system information.

Herein, the network topology information includes information of links and connection ports between all SDN devices in the SDN. The link-tunnel correspondence information includes the number and status of tunnels corresponding to each of the links in the SDN. The bandwidth resource information includes bandwidth resource usage and tunnel resource reservation of all links in the SDN. The ring system information includes a ring system progressive relationship and a network layer to which each SDN device in ring systems including all SDN devices in the SDN belongs. The ring system progressive relationship includes a mapping relationship from the SDN devices to the ring systems, a mapping relationship from the links to the ring systems, a mapping relationship from the devices to the network layers and a progressive relationship between rings, the network layers includes, in ascending order, an access edge, an access layer, a convergence-access layer, a convergence layer, a core convergence layer, a core layer, a core edge, a provincial trunk and a national trunk.

Herein, the ring system refers to a ring, chain, or other system structure including SDN devices physically connected with each other, and each of the SDN devices belongs to only one ring system and one network layer. The ring system progressive relationship is a progressive relationship of systems set on demand when an operator configures the SDN devices. The ring system generally complies with a progressive relationship of network layers, but sometimes dose not. Although the ring system generally complies with a progressive relationship of network layers, there is something from other network layers. The ring system can be understood as a kind of progressive systematic division, for example, a certain street--a certain street--a certain town--a certain county--a certain city--a certain province-a national trunk, that is, an affiliation is assumed for each device.

Specifically, the operation of generating the network topology information includes the follows.

After the controller is started, data reported by the SDN devices is loaded, automatic discovery of topology in the devices is completed, and network topology status of the devices is loaded into a memory of the controller, including nodes virtualized from the devices, links between the devices, connection ports and other information, to generate a connection relationship of a directed graph. For example, the controller is provided with tunnel persistence and cache loading after startup, the controller is provided with collection of rerouting information and change of tunnel status, and path support is provided for rerouting. In this way, data preparation of path calculation is provided for rerouting.

Specifically, the operation of generating the link-tunnel correspondence relationship information includes the follows.

The controller is provided with tunnel persistence and cache loading after startup, the controller is provided with collection of rerouting information and change of tunnel status. For example, the controller loads existing operational tunnels of the devices, generating a link-tunnel model. This provides a basis for fault awareness and spontaneous rerouting.

Specifically, the operation of generating the bandwidth resource information includes the follows.

After the controller is started, bandwidth management is performed according to the network topology information and the link-tunnel correspondence information, so as to provide guarantee of parallel resource reservation and continuous management of resource for batch rerouting. For example, resource usage of the devices is recorded, including the used and unused information of each link between the devices, and resource reservation is made for the loaded tunnel.

Specifically, the operation of generating the ring system information includes the follows.

The ring system information is initialized, a belonging relationship between each node equipment and the ring system is recorded, a progressive relationship between the parent ring systems of the ring system is recursively recorded. At the same time, the network layers after the devices are virtualized as nodes includes: an access edge, an access layer, a convergence-access layer, a convergence layer, a core convergence layer, a core layer, a core edge, a provincial trunk and a national trunk.

In 202, in response to a fault event occurring on a first link in SDN, rerouting calculation is performed in parallel for all first tunnels on the first link that require the rerouting calculation according to the first information.

In some examples, the operation of performing rerouting calculation in parallel includes: trimming network topology of the SDN based on the first link according to network topology information and ring system information of the SDN; calculating rerouting of the first tunnel in parallel according to a partial order control according to bandwidth resource information and the ring system information of the SDN based on the trimmed network topology of the SDN.

Herein, the partial order control includes determining a next hop of a route according to a network layer order and a ring system order.

The ring system order includes preferentially determining SDN devices in the same ring system as the start SDN device and the destination SDN device as next hops.

The network layer order includes preferentially determining SDN devices for appropriate network layers as next hops according to distal or proximal relative positions in consideration of a network layer of the start SDN device and a network layer of the destination SDN device. Specifically, the controller detects batch fault events, searches tunnels that require to initiate rerouting according to batch device fault events, collects topology information, cuts off irrelevant links, and implements batch rerouting through an improved depth first search. Or route recovery and failback are performed according to batch device recovery events. For example, network topology trimming and analysis of the ring system are provided prior to the rerouting calculation, and the partial order control and the depth first search of the ring system are provided during rerouting to provide resource conflict protection for parallel path calculation.

The improved depth first search may be any one of existing algorithms for the depth first search, which is not limited herein.

The technical solutions provided in the embodiments of the present disclosure have the following advantages compared with the existing technology.

Firstly, the controller directly masters the physical state and connection relationship of the devices in the control domain, performs topology virtualization, tunnel management and resource reservation, and provides better routing control, routing forwarding and coordinating capabilities, fault awareness and recovery capabilities for the devices.

Secondly, the problem of slow rerouting and inconvenience in solving resource conflict in traditional path calculation is solved.

Thirdly, the process of rerouting takes into account the ring system information and network layer information of the devices, uses the trimming algorithm, the partial order control algorithm and the parallel depth first search algorithm, thereby realizing the parallel calculation of routing and the concurrent reservation of resources.

Fourthly, compared with ordinary service rerouting, performance of the parallel rerouting in the present solution is greatly improved.

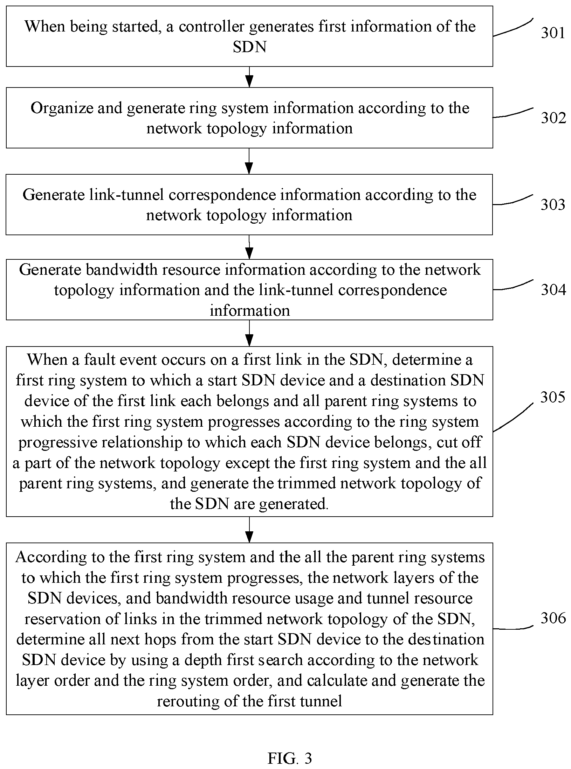

FIG. 3 is a flow chart of a method for implementing rerouting according to another embodiment of the present disclosure. The method is applicable to a software defined network (SDN) controller. As shown in FIG. 3, the method includes operations as follows.

In 301, when being started, a controller generates first information of the SDN.

Specifically, the devices in the control domain are automatically discovered, node virtualization, link abstraction, port mapping and the like are performed for the devices, and then a point-chain relationship of a directed graph is established and loaded into a memory of the controller for topology resource management. For example, the network topology information includes information of links and connection ports between all SDN devices in the SDN, and the like.

In 302, ring system information is organized and generated according to the network topology information.

Specifically, the controller initializes the ring system information, mainly establishing a mapping relationship from the devices to the ring systems, a mapping relationship from the links to the ring systems, a mapping relationship from the devices to the network layers, and a progressive relationship between the ring systems, providing information preparation for the network topology trimming at the beginning of the subsequent rerouting, providing the reliability guarantee for the partial order control, and providing the performance support for the fast parallel rerouting. For example, the ring system information includes a ring system to which each SDN device in ring systems including all SDN devices in the SDN belongs, as well as a progressive relationship and a network layer of the ring system, the progressive relationship of the ring system includes a mapping relationship from the SDN devices to the ring systems, a mapping relationship from the links to the ring systems, a mapping relationship from the devices to the network layers and a progressive relationship between rings, the network layers includes, in ascending order, an access edge, an access layer, a convergence-access layer, a convergence layer, a core convergence layer, a core layer, a core edge, a provincial trunk and a national trunk.

Herein, the ring system refers to a ring, chain, or other system structure including SDN devices physically connected with each other, and each of the SDN devices belongs to only one ring system and one network layer. The ring system progressive relationship is a progressive relationship of systems set on demand when an operator configures the SDN devices. The ring system generally complies with a progressive relationship of network layers, but sometimes dose not. Although the ring system generally complies with a progressive relationship of network layers, there is something from other network layers. The ring system can be understood as a kind of progressive systematic division, for example, a certain street--a certain street--a certain town--a certain county--a certain city--a certain province--a national trunk, that is, an affiliation is assumed for each device.

In 303, link-tunnel correspondence information is generated according to the network topology information.

Specifically, the controller loads persistent tunnel information, reads path information into a cache memory, and sequentially allocates resources synchronously in the bandwidth management module for loaded tunnels, and establishes a mapping relationship between the links and the tunnels, so as to provide a quick query for subsequent fast collection of tunnels that require rerouting when one or more links fail. For example, the link-tunnel correspondence information includes the number and status of tunnels corresponding to each of the links in the SDN.

In 304, bandwidth resource information is generated according to the network topology information and the link-tunnel correspondence information.

Specifically, the bandwidth resource information is initialized for each link in the SDN, the maximum, used, and unused bandwidth resources are recorded, and stable guarantee of parallel resource reservation is provided for parallel rerouting. For example, the bandwidth resource information includes bandwidth resource usage and tunnel resource reservation of all links in the SDN.

In 305, when a fault event occurs on a first link in the SDN, a first ring system to which a start SDN device and a destination SDN device of the first link each belongs and all parent ring systems to which the first ring system progresses are determined according to the ring system progressive relationship to which each SDN device belongs, a part of the network topology except the first ring system and the all parent ring systems is cut off, and the trimmed network topology of the SDN are generated.

Specifically, a ring system to which a start SDN device belongs is found, and all parent systems of the system are found progressively; and a ring system to which the destination SDN device belongs is found, and all parent systems of the system are found progressively. The immediate node devices and associated links in all systems found previously are retained, and the rest are cut off.

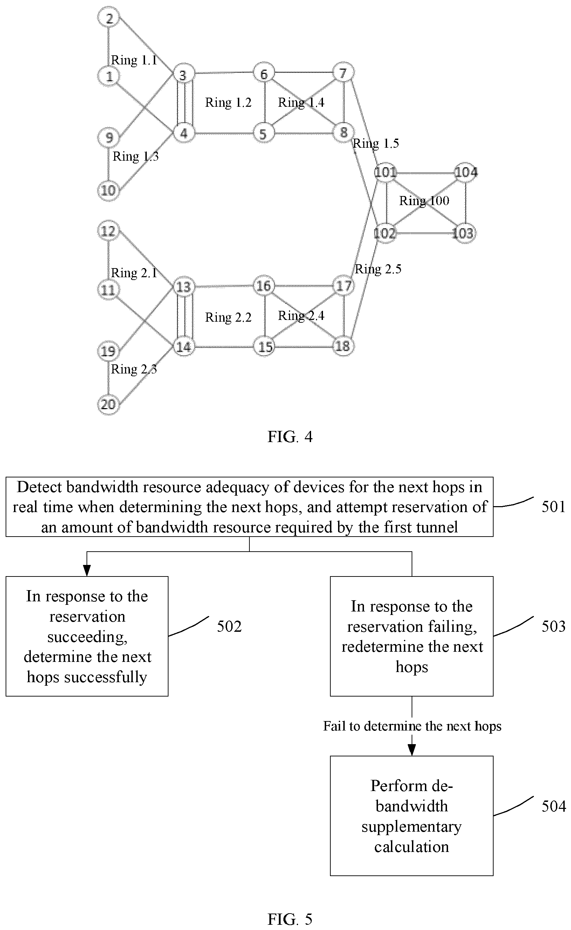

For example, as shown in FIG. 4, it is assumed that a start point for rerouting is node 1 and a destination point for rerouting is node 2. The start point 1 belongs to a ring 1.1, and progressive parent rings includes a ring 1.2, a ring 1.4, a ring 1.5 and a ring 100, and the destination point 2 also belongs to the ring 1.1. In this case, the final result of trimming is to retain the nodes 1, 2, 3, 4, 5, 6, 7, 8, 9, 10, 101, 102, 103 and 104, as well as all links directly associated with those nodes.

For example, it is assumed that a start point for rerouting is node 8 and a destination point for rerouting is node 18. The start point 8 belongs to a ring 1.4, and progressive parent rings includes a ring 1.5 and a ring 100. The destination point 18 belongs to a ring 2.4, and progressive parent rings includes a ring 2.5 and a ring 100. In this case, the final result of trimming is to retain the nodes 5, 6, 7, 8, 101, 102, 103, 104, 15, 16, 17 and 18, as well as all links directly associated with those nodes.

For example, it is assumed that a start point is node 103 and a destination point is node 104. In this case, the final result of trimming is to retain the nodes 101, 102, 103 and 104, as well as all links directly associated with those nodes.

In this way, in the trimming, the devices in the irrelevant ring systems are marked as path calculation irrelevance according to the ring system information, and only the trimmed network topology are retained, thereby reducing the scale of the path calculation.

In 306, according to the first ring system and the all the parent ring systems to which the first ring system progresses, the network layers of the SDN devices, and bandwidth resource usage and tunnel resource reservation of links in the trimmed network topology of the SDN, all next hops from the start SDN device to the destination SDN device are determined by using a depth first search according to the network layer order and the ring system order, and the rerouting of the first tunnel is calculated and generated.

In some examples, after the fault event occurs on the first link, and before the rerouting is generated, the method further includes the follows.

All first tunnels on the first link that require rerouting calculation are determined according to the number and status of tunnels corresponding to each of the links in the SDN. For example, when a fault event occurs, a request in urgent need of rerouting may be re-queried in a cache memory of a tunnel, and all first tunnels on the first link that require rerouting calculation may be determined.

Herein, the rerouting of each first tunnel may be calculated in parallel to improve efficiency of rerouting.

In some examples, the first tunnel may be calculated and generated according to a partial order control algorithm. Herein, the partial order control includes two principles: a network layer order (network layer partial order) and a ring system order (ring system partial order). The ring system order refers to preferentially determining SDN devices in the same ring system as the start SDN device and the destination SDN device of the faulted link as next hops. The network layer order refers to preferentially determining SDN devices for appropriate network layers as next hops according to distal or proximal relative positions in consideration of a network layer of the start SDN device and a network layer of the destination SDN device. For example, as shown in FIG. 4, devices 1, 2, 3, 4 are sequentially connected to each other to form a parent ring, and when a link between the start point 1 and the destination point 2 fails, the device 3 is preferentially determined as a next hop for the start point 1 in rerouting calculation. For another example, devices 1, 2, 3 and 4 are sequentially connected to each other to form a parent ring, which is an access edge ring; devices 3, 4, 5 and 6 are connected to each other to form another parent ring, which is an access layer ring; and devices 3, 4, 10 and 9 are sequentially connected to form a further access edge ring. When the link between the start point 1 and the end point 2 fails, the device 3 is preferentially determined as a next hop for the start point 1 in rerouting calculation. While consideration to resource usage of each link is also required, if the resources passing through the devices 3-4 are insufficient, the device 4 may select the devices 5 and 10 as the next hops, but due to a cross-ring constraint, i.e. the network layer order, the device 4 preferentially selects the device 5 in the access layer ring, instead of the device 10 in the access edge ring, as the next hop. The cross-ring constraint is based on the network layers, and a device in a higher network layer is preferentially selected as the next hop. In this way, the network layer order and the ring system progressive order affect the depth first search, control the next-hop direction in path calculation, and improve the search algorithm, thereby resulting in faster path finding.

Herein, a node device belongs to only one ring system and only one network layer. The partial order control is used to direct the next hop with consideration of at least one of the following:
A. a network layer and a ring system of the start point;
B. a network layer and a ring system of the destination point;
C. a network layer and a ring system of the current node;
D. network layers and ring systems in which all next hops of the current node located;
E. a network layer and a ring system tangent to the ring system in which the start point and the destination point are located when progressively searching upward from the start point and the destination point
F. relative to the network layers and the systems of the start point and the tangent point, whether the location of the current node is away from or close to the tangent point;
G. relative to the network layers and the systems of the start point and the tangent point, whether the location of the node for the next hop is away from or close to the tangent point.

Weighting is performed according to the relative distances between the nodes in A, B, C and D to determine the next-hop direction.

Herein, the controller operates stably to monitor the fault events of all devices in the control domain, quickly calculate rerouting when the fault events occur, and send the calculation results to the devices in time to affect routing and forwarding of the devices. In addition, when a failback event occurs, that is, when the failed link recovers, fast failback of the path may be selected.

In another embodiment of the present disclosure, for the operation in 306 of the previous embodiment, a specific process of determining the next hops is shown in FIG. 5, including the following operations.

In 501, bandwidth resource adequacy of devices for the next hops is detected in real time when determining the next hops, and reservation of an amount of bandwidth resource required by the first tunnel is attempted.

In 502, in response to the reservation succeeding, the next hops are successfully determined.

In 503, in response to the reservation failing, the next hops are redetermined.

Herein, the next hops may be redetermined according to the network layer order, and in response to failing to determine the next hops from a previous network layer, the next hops are determined from a next network layer until the destination SDN device.

Herein, when determining each next hop, it is necessary to determine whether the resources for the next hop are sufficient according to the bandwidth resource usage of the link and the tunnel resource reservation. The next hop is re-determined when the resources for the next hop are insufficient.

The technical solution according to the present embodiment provides guarantee of parallel resource reservation and continuous management of resource for batch rerouting, thereby solving a problem of concurrent resource conflict and completing batch fast rerouting.

In addition, when failing to find the next hops during calculating the rerouting of the first tunnel, that is, the next hops cannot be determined, the method further includes a following operation.

In 504, de-bandwidth supplementary calculation is performed.

The operation of performing de-bandwidth supplementary calculation includes determining the next hops using the depth first search directly according to the network layer order and the ring system order with no longer consideration of the bandwidth resource usage and tunnel resource reservation of the links in the SDN.

Herein, the depth first search may be any one of existing algorithms for the depth first search, which is not limited herein.

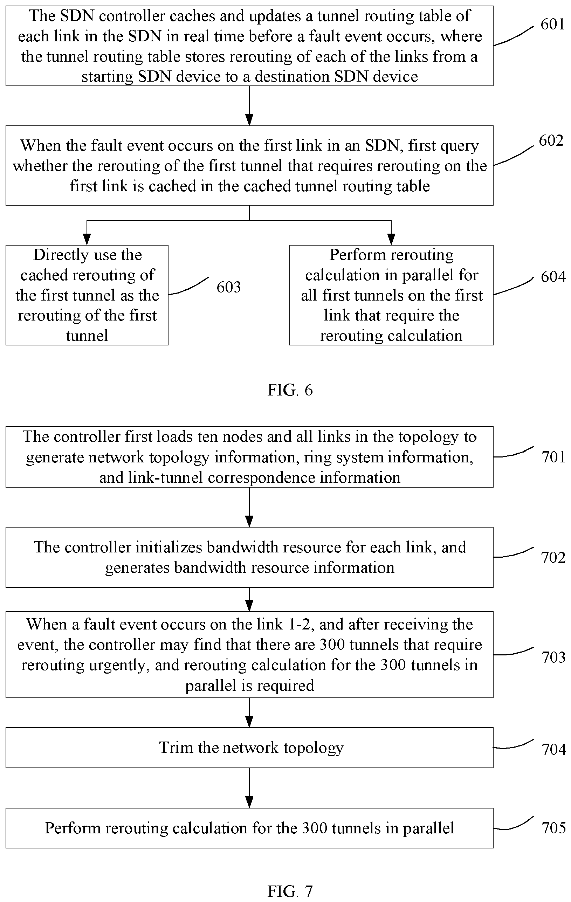

In another embodiment of the present disclosure, as shown in FIG. 6, the method includes operations as follows.

In 601, the SDN controller caches and updates a tunnel routing table of each link in the SDN in real time before a fault event occurs, where the tunnel routing table stores rerouting of each of the links from a start SDN device to a destination SDN device.

Herein, the cache memory stores the tunnel routing table that conforms to the requirements and has the same start point and destination point, that is, a homologous and homoclinic caching, and meanwhile continuously updates routing with changes of resources.

In 602, when the fault event occurs on the first link in an SDN, it is first queried whether the rerouting of the first tunnel that requires rerouting on the first link is cached in the cached tunnel routing table.

In response to the rerouting of the first tunnel being cached in the cached tunnel routing table, operation in 603 is performed. In response to no rerouting of the first tunnel being cached in the cached tunnel routing table, operation in 604 is performed.

In 603, the cached rerouting of the first tunnel is directly used as the rerouting of the first tunnel.

Further, Wherein, it is also possible to determine whether the bandwidth resource for the rerouting is sufficient, that is, whether bandwidth allocation is successful. If successful, the cached rerouting of the first tunnel is directly used as the rerouting of the first tunnel, and if unsuccessful, operation in 604 is performed.

In 604, rerouting calculation is performed in parallel for all first tunnels on the first link that require the rerouting calculation.

In this way, for a large-scale network, the homologous and homoclinic caching is introduced to cache the tunnel routing table in advance; and for batch rerouting events, querying in the cache memory is preferentially performed during path calculation to improve efficiency of rerouting.

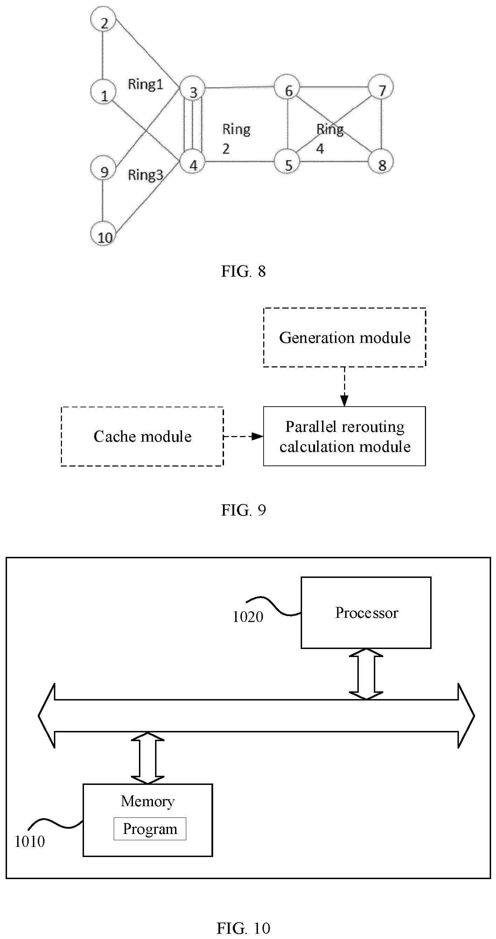

FIG. 7 is a flow chart of a method for implementing rerouting according to another embodiment of the present disclosure. The method is applicable to a software defined network (SDN) controller. This embodiment is applicable to the network topology shown in FIG. 8.

As shown in FIG. 7, the method includes the following operations.

In 701, the controller first loads ten nodes and all links in the topology to generate network topology information, ring system information, and link-tunnel correspondence information.

For example, a connection relationship between devices and a tunnel relationship are shown in FIG. 8.

In 702, the controller initializes bandwidth resource for each link, and generates bandwidth resource information. In this embodiment, it is assumed that a link between devices 1 and 2 (hereafter "link 1-2") carries 300 services, and the bandwidth resource information includes bandwidth resource usage of the link 1-2, resource reservation of each tunnel, and the like.

In 703, when a fault event occurs on the link 1-2, and after receiving the event, the controller may find that there are 300 tunnels that require rerouting urgently, and rerouting calculation for the 300 tunnels in parallel is required.

In 704, the network topology is trimmed.

Specifically, the device 1 is a start point and the device 2 is a destination point. Both the devices 1 and 2 belong to a ring 1. A ring 2 is a progressive parent ring of the ring 1, and a ring 4 is a progressive parent ring of the ring 2. A ring 3 to which devices 9 and 10 belong and the ring 1 are tangent to the ring 2, and the devices 1, 2, 9 and 10 belong to an access edge layer, the devices 3 and 4 belong to an access layer, the devices 5 and 6 belong to a convergence-access layer, and the devices 7 and 8 belong to a convergence layer. Thus, when a fault event occurs on the link 1-2, the nodes 1, 2, 3, 4, 5, 6, 9 and 10 and all links directly associated with the those nodes are retained, and devices 7, 8 are cut off.

In 705, rerouting calculation for the 300 tunnels in parallel is performed.

A specific process includes the follows.

The device 1 is a start point and the device 2 is a destination point. Both the devices 1 and 2 belong to a ring 1. The node 4 is arrived at from the node 1 through a first hop, and there are three options at node 4, i.e. nodes 3, 5 and 10. Since the start point and the end point belong to the same ring, according to the ring system order, any next hop in the ring where the start point and the destination point are located is preferred, and thus the next hop is node 3 and then ends in node 2.

In the process of rerouting calculation for a tunnel, bandwidth resource adequacy of devices for the next hops is detected in real time when determining the next hops, reservation is attempted, and next hopping is performed if the reservation is successful. For example, reservation of the resources needed for the tunnel is attempted on the link 4-3, and the node 3 is determined as the next hop if the reservation is successful. After a batch of requests are calculated in parallel, for example, after rerouting of 100 tunnels is performed, the bandwidth of the link 4-3 is insufficient, and thus it is necessary to re-determine the next hop. In this case, the next hop for the node 4 may be the node 5 or the node 10. According to the cross-ring constraint, i.e., the network layer order, the partial order control will direct the next hop to the node 5, and then to the next hops 6 and 3, and finally to the destination point 2. For example, after rerouting of further 100 tunnels is performed, the bandwidth of the link 4-5 is insufficient, and thus it is necessary to re-determine the next hop. In this case, the next hop for the node 4 may be only the node 10, and then hops to the nodes 9 and 3, and finally to the destination point 2. For example, after rerouting of further 50 tunnels is performed, the bandwidth of the link 4-10 is insufficient. In this case, if there is no suitable next hop in the network for the rest 50 links, the de-bandwidth supplementary calculation is performed, that is, the node 3 is determined as the next hop according to the ring system order and the network layer order with no longer consideration of bandwidth.

In this way, the controller completes batch rerouting, delivers the results to the related devices to affect the routing and forwarding of the corresponding devices, thereby ensuring data transmission capability of the corresponding devices.

The technical solutions provided in the embodiments of the present disclosure can provide the controller with the capability of fault awareness and fast service rerouting, so as to serve the devices better, and provide strong guarantee for the routing and forwarding of the devices. Even if faults occur in multiple points and a large scale of services are suddenly offline, fast rerouting can be performed, service recovery can be completed, and service bandwidth can be better guaranteed. During the rerouting, the concurrent resource collision and batch fast rerouting are completed with characteristics such as ring system, trimming and partial order control.

An embodiment of the present disclosure further provides a device for implementing rerouting. FIG. 9 is a schematic structural diagram of a device for implementing rerouting according to an embodiment of the present disclosure. The device is applicable to a software defined network (SDN) controller. As shown in FIG. 9, the device includes a parallel rerouting calculation module.

The parallel rerouting calculation module is configured to perform rerouting calculation in parallel for all first tunnels on the first link that require the rerouting calculation in response to a fault event occurring on a first link in SDN.

Herein, the operation of performing rerouting calculation in parallel includes: trimming network topology of the SDN based on the first link according to network topology information and ring system information of the SDN; calculating rerouting of the first tunnel in parallel according to a partial order control according to bandwidth resource information and the ring system information of the SDN based on the trimmed network topology of the SDN; where the partial order control includes determining a next hop of a route according to a network layer order and a ring system order.

In some examples, the device further includes a generation module.

The generation module is configured to, before the fault event occurring on the first link in the SDN and in response to the SDN controller being started, generate and save the network topology information, link-tunnel correspondence information, the bandwidth resource information, and the ring system information of the SDN.

Specifically, the generation module includes a topology loading module, a tunnel management module, and a bandwidth management module.

The topology loading module is configured to generate the network topology information. The tunnel management module is configured to generate the link-tunnel correspondence information. The bandwidth management module is configured to generate the bandwidth resource information. The parallel reroute calculation module is further configured to generate the ring system information.

For example, the topology loading module provides data preparation of path calculation for rerouting, caches information of device nodes, links, and ports;

The tunnel management module provides tunnel persistence and cache loading after startup for the controller, provides collection of rerouting information and change of tunnel status for the controller, and provides path support for the rerouting.

For the bandwidth management module, after the controller is started, the data of the topology loading module needs to be initialized and loaded into the bandwidth management module, and the data loaded by the tunnel management module needs to be initialized into the bandwidth management module. The bandwidth management module controls the resources, and provides guarantee of parallel resource reservation and continuous management of resource for batch rerouting.

The parallel rerouting calculation module solves the batch path calculation, provides trimming and analysis of the ring system before the rerouting calculation, provides partial order control of the ring system during rerouting, provides resource conflict protection for parallel path calculation, and provides different supplementary calculation strategies when rerouting fails, such as de-bandwidth supplementary calculation.

Herein, the network topology information includes information of links and connection ports between all SDN devices in the SDN. The link-tunnel correspondence information includes the number and status of tunnels corresponding to each of the links in the SDN. The bandwidth resource information includes bandwidth resource usage and tunnel resource reservation of all links in the SDN. The ring system information includes a ring system progressive relationship and a network layer to which each SDN device in ring systems including all SDN devices in the SDN belongs, the ring system progressive relationship includes a mapping relationship from the SDN devices to the ring systems, a mapping relationship from the links to the ring systems, a mapping relationship from the devices to the network layers and a progressive relationship between rings, the network layers includes, in ascending order, an access edge, an access layer, a convergence-access layer, a convergence layer, a core convergence layer, a core layer, a core edge, a provincial trunk and a national trunk.

Herein, the parallel rerouting calculation module is further configured to determine all first tunnels on the first link that require rerouting calculation according to the number and status of tunnels corresponding to each of the links in the SDN before performing rerouting calculation in parallel for all first tunnels on the first link that require the rerouting calculation.

Herein, the operation of trimming network topology of the SDN based on the first link according to the network topology information and the ring system information of the SDN includes: determining a first ring system to which a start SDN device and a destination SDN device of the first link each belongs and all parent ring systems to which the first ring system progresses according to the ring system progressive relationship to which each SDN device belongs, cutting off a part of the network topology except the first ring system and the all parent ring systems, and generating the trimmed network topology of the SDN.

In some examples, the operation of calculating rerouting of the first tunnel in parallel according to the partial order control according to the bandwidth resource information and the ring system information of the SDN includes: according to the first ring system and the all the parent ring systems to which the first ring system progresses, the network layers of the SDN devices, and bandwidth resource usage and tunnel resource reservation of links in the trimmed network topology of the SDN, determining all next hops from the start SDN device to the destination SDN device using a depth first search according to the network layer order and the ring system order, and calculating and generating the rerouting of the first tunnel.

Herein, the ring system order includes preferentially determining SDN devices in the same ring system as the start SDN device and the destination SDN device as next hops.

Herein, the network layer order includes preferentially determining SDN devices for appropriate network layers as next hops according to distal or proximal relative positions in consideration of a network layer of the start SDN device and a network layer of the destination SDN device.

Herein, bandwidth resource adequacy of devices for the next hops is detected in real time when determining the next hops, and reservation of an amount of bandwidth resource required by the first tunnel is attempted. In response to the reservation succeeding, the next hops are successfully determined until the destination SDN device. In response to the reservation failing, the next hops are redetermined according to the network layer order, and in response to failing to determine the next hops from a previous network layer, the next hops are determined from a next network layer until the destination SDN device.

Herein, in response to failing to find the next hops during calculating the rerouting of the first tunnel, the de-bandwidth supplementary calculation is performed.

Herein, the operation of performing de-bandwidth supplementary calculation includes: determining the next hops using the depth first search directly according to the network layer order and the ring system order with no longer consideration of the bandwidth resource usage and tunnel resource reservation of the links in the SDN.

Herein, the device further includes a cache module configured to, before the fault event occurring on the first link in the SDN, cache and update in real time a tunnel routing table for each of links in the SDN, where the tunnel routing table stores rerouting of each of the links from a start SDN device to a destination SDN device.

Herein, the parallel rerouting calculation module is configured to, in response to the fault event occurring on the first link in the SDN, query whether the rerouting of the first tunnel is cached in the cached tunnel routing table, in response to the rerouting of the first tunnel being cached in the cached tunnel routing table, directly use the cached rerouting of the first tunnel as the rerouting of the first tunnel, and in response to no rerouting of the first tunnel being cached in the cached tunnel routing table, re-perform rerouting calculation in parallel for all first tunnels on the first link that require the rerouting calculation.

An embodiment of the present disclosure further provides a computer-readable storage medium storing an information processing program. The information processing program, when executed a processor, causes the processor to perform a method for implementing rerouting in any one of the aforementioned embodiments.

As shown in FIG. 10, an embodiment of the present disclosure further provides a device for implementing rerouting, including a memory 1010 and a processor 1020. The memory 1010 stores a program that, when read and executed by the processor 1020, causes the processor 1020 to perform a method for implementing rerouting according to any one of the aforementioned embodiments.

In the technical solution provided in the embodiments of the present disclosure, the rerouting and recovery of batch services are ensured by taking bandwidth management as guarantee of parallel resource reservation, combined with the system characteristics of the ring network and the progressive relationship of the network layers, with the partial order control as the path calculation guide, with pruning and homologous and homoclinic caching as the auxiliary, with fast path calculation completed by depth first search, so as to provide strong and stable guarantee for the routing and forwarding of the devices.

Those having ordinary skill in the art shall understand that all or some of the operations in the method disclosed above and the functional modules/units in the system and the apparatus can be implemented as software, firmware, hardware and an appropriate combination thereof. In the hardware implementation, division between functional modules/units mentioned in the above description does not necessarily correspond to division of physical components. For example, one physical component may have multiple functions, or one function or step may by implemented by several physical components. Some physical components or all physical components may be implemented as software executed by a processor, such as a central processing unit, a digital signal processor, or a microprocessor, or may be implemented as hardware, or may be implemented as an integrated circuit, for example, an application specific integrated circuit. Such software can be distributed on a computer-readable medium, which can include a computer storage medium (or nontransitory medium) and a communication medium (or transitory medium). As well known to those having ordinary skill in the art, the term computer storage medium includes a volatile or non-volatile, removable or irremovable medium implemented in any method or technology applied to storage information (such as a computer-readable instruction, a data structure, a computer program module or other data). The computer storage medium includes, but is not limited to, a random access memory (RAM), a read-only memory (ROM), an electrically erasable programmable read only memory (EEPROM), a flash memory or other memory technology, a compact disc read-only memory (CD-ROM), a digital versatile disc (DVD) or another optical disc memory, a magnetic box, a magnetic tape, a magnetic disc or another magnetic storage apparatus, or any other medium applicable to storing desired information and accessible by a computer. In addition, as is well known to those having ordinary skill in the art, the communication medium usually includes computer-readable instructions, data structures, program modules, or other data in a modulated data signal such as a carrier wave or other transmission mechanisms, and may include any information delivery medium.

## Claims

1. A method for implementing rerouting, applicable to a software defined network, SDN, controller, comprising:
in response to a fault event occurring on a first link in a SDN, performing (101) rerouting calculation in parallel for all first tunnels on the first link that require the rerouting calculation; wherein performing rerouting calculation in parallel includes:
trimming network topology of the SDN based on the first link according to network topology information and ring system information of the SDN;
calculating rerouting of each of the all first tunnels in parallel according to a partial order control algorithm according to bandwidth resource information and the ring system information of the SDN based on the trimmed network topology of the SDN;
wherein before performing rerouting calculation in parallel for all first tunnels on the first link that require the rerouting calculation, the method further comprises:
determining all first tunnels on the first link that require rerouting calculation according to the number and status of tunnels corresponding to each of links in the SDN;
wherein the partial order control algorithm includes determining a next hop of a route according to a network layer order and a ring system order, the ring system information includes a ring system to which each SDN device in ring systems including all SDN devices in the SDN belongs, a ring system progressive relationship and a network layer of the ring system, wherein the ring system refers to a system structure including SDN devices physically connected with each other, and each of the SDN devices belongs to only one ring system and one network layer, the ring system progressive relationship includes a mapping relationship from the SDN devices to the ring systems, a mapping relationship from the links to the ring systems, a mapping relationship from the SDN devices to network layers and a progressive relationship between rings, the network layers includes, in ascending order, an access edge, an access layer, a convergence-access layer, a convergence layer, a core convergence layer, a core layer, a core edge, a provincial trunk and a national trunk; the ring system order comprises determining SDN devices in a same ring system as a start SDN device and a destination SDN device of a faulted link as next hops; and the network layer order comprises determining SDN devices for appropriate network layers as the next hops according to distal or proximal relative positions in consideration of a network layer of the start SDN device and a network layer of the destination SDN device;
wherein calculating rerouting of the first tunnel in parallel according to the partial order control algorithm according to the bandwidth resource information and the ring system information of the SDN includes:
according to a first ring system and all parent ring systems to which the first ring system progresses, the network layers of the SDN devices, and bandwidth resource usage and tunnel resource reservation of links in the trimmed network topology of the SDN, determining (306) all next hops from the start SDN device to the destination SDN device using a depth first search algorithm according to the network layer order and the ring system order, and calculating and generating the rerouting of the first tunnel.

2. The method according to claim 1, wherein before the fault event occurring on the first link in the SDN, the method further comprises:
in response to a SDN controller being started, generating and saving the network topology information, link-tunnel correspondence information, the bandwidth resource information, and the ring system information of the SDN.

3. The method according to claim 2, wherein
the network topology information includes information of the links and connection ports between all SDN devices in the SDN;
the link-tunnel correspondence information includes the number and status of the tunnels corresponding to the each of the links in the SDN;
the bandwidth resource information includes the bandwidth resource usage and the tunnel resource reservation of all links in the SDN.

4. The method according to claim 3, wherein trimming network topology of the SDN based on the first link according to the network topology information and the ring system information of the SDN includes:
determining (305) the first ring system to which a start SDN device and a destination SDN device of the first link each belongs and the all parent ring systems to which the first ring system progresses according to the ring system progressive relationship to which each SDN device belongs, cutting off a prat of the network topology except the first ring system and the all parent ring systems, and generating the trimmed network topology of the SDN.

5. The method according to claim 1, further comprising:
detecting (501) bandwidth resource adequacy of devices for the next hops in real time when determining the next hops, and attempting reservation of an amount of bandwidth resource required by the first tunnel;
in response to a reservation succeeding, successfully determining (502) the next hops until the destination SDN device; and
in response to a reservation failing, re-determining (503) the next hops according to the network layer order, and in response to failing to determine the next hops from a previous network layer, determining the next hops from a next network layer until the destination SDN device.

6. The method according to claim 5, further comprising:
in response to failing to find the next hops during calculating the rerouting of the first tunnel, performing (504) a de-bandwidth supplementary calculation;
wherein performing (504) de-bandwidth supplementary calculation includes:
determining the next hops using the depth first search algorithm directly according to the network layer order and the ring system order with no longer consideration of the bandwidth resource usage and tunnel resource reservation of the links in the SDN.

7. The method according to claim 1, wherein before the fault event occurring on the first link in the SDN, the method further comprises:
caching and updating (601) in real time a tunnel routing table for each of the links in the SDN, wherein the tunnel routing table stores rerouting of each of the links from a start SDN device to a destination SDN device;
wherein in response to the fault event occurring on the first link in the SDN, the method further comprises:
querying (602) whether the rerouting of the first tunnel is cached in the cached tunnel routing table;
in response to the rerouting of the first tunnel being cached in the cached tunnel routing table, directly using (603) the cached rerouting of the first tunnel as the rerouting of the first tunnel; and
in response to no rerouting of the first tunnel being cached in the cached tunnel routing table, reperforming (604) rerouting calculation in parallel for all first tunnels on the first link that require the rerouting calculation.

8. A device for implementing rerouting, **characterized by** comprising a memory (1010) and a processor (1020), wherein the memory (1010) stores a program, when read and executed by the processor (1020), causing the processor (1020) to perform a method for implementing rerouting according to any one of claims 1 to 7.

9. A computer-readable storage medium, **characterized by** storing one or more programs executable by one or more processors (1020), wherein the one or more programs, when executed by the one or more processors (1020), cause the one or more processors (1020) to perform a method for implementing rerouting according to any one of claims 1 to 7.

## Patentansprüche

1. Verfahren zur Umleitungsimplementierung, das bei einer Steuereinheit eines softwaredefinierten Netzwerks, SDN, anwendbar ist, umfassend:
in Reaktion auf ein Fehlerereignis, das auf einer ersten Verbindung in einem SDN auftritt, Durchführen (101) einer Umleitungsberechnung parallel für alle ersten Tunnel auf der ersten Verbindung, die die Umleitungsberechnung benötigen;
wobei paralleles Durchführen der Umleitungsberechnung beinhaltet:
Trimmen der Netzwerktopologie des SDN basierend auf der ersten Verbindung in Übereinstimmung mit Netzwerktopologieinformationen und Ringsysteminformationen des SDN;
Berechnen einer Umleitung von jedem aller ersten Tunnel parallel in Übereinstimmung mit einem Teilreihenfolgen-Steueralgorithmus in Übereinstimmung mit Bandbreitenressourceninformationen und den Ringsysteminformationen des SDN basierend auf der getrimmten Netzwerktopologie des SDN;
wobei vor Durchführen einer Umleitungsberechnung parallel für alle ersten Tunnel auf der ersten Verbindung, die die Umleitungsberechnung benötigen, das Verfahren weiter umfasst:
Bestimmen aller ersten Tunnel auf der ersten Verbindung, die Umleitungsberechnung benötigen, in Übereinstimmung mit der Anzahl und dem Status von Tunneln, die jeder von Verbindungen in dem SDN entsprechen;
wobei der Teilreihenfolgen-Steueralgorithmus Bestimmen eines nächsten Hops einer Route in Übereinstimmung mit einer Netzwerkschichtreihenfolge und einer Ringsystemreihenfolge beinhaltet, die Ringsysteminformationen ein Ringsystem, zu dem jede SDN-Vorrichtung in Ringsystemen, die alle SDN-Vorrichtungen in dem SDN beinhalten, gehört, ein progressives Ringsystemverhältnis und eine Netzwerkschicht des Ringsystems beinhalten, wobei sich das Ringsystem auf eine Systemstruktur bezieht, die SDN-Vorrichtungen beinhaltet, die physisch miteinander verbunden sind, und jede der SDN-Vorrichtungen zu nur einem Ringsystem und einer Netzwerkschicht gehört, das progressive Ringsystemverhältnis ein Abbildungsverhältnis von den SDN-Vorrichtungen auf die Ringsysteme, ein Abbildungsverhältnis von den Verbindungen auf die Ringsysteme, ein Abbildungsverhältnis von den SDN-Vorrichtungen auf Netzwerkschichten und ein progressives Verhältnis zwischen Ringen beinhaltet, die Netzwerkschichten in aufsteigender Reihenfolge einen Zugriffsrand, eine Zugriffsschicht, eine Konvergenz-Zugriffsschicht, eine Konvergenzschicht, eine Kernkonvergenzschicht, eine Kernschicht, einen Kernrand, einen Provinzstamm und einen nationalen Stamm beinhalten; die Ringsystemreihenfolge Bestimmen von SDN-Vorrichtungen in einem selben Ringsystem als eine SDN-Startvorrichtung und eine SDN-Zielvorrichtung einer fehlerhaften Verbindung als nächste Hops umfasst; und die Netzwerkschichtreihenfolge Bestimmen von SDN-Vorrichtungen für passende Netzwerkschichten als die nächsten Hops in Übereinstimmung mit distalen oder proximalen relativen Positionen unter Berücksichtigung einer Netzwerkschicht der SDN-Startvorrichtung und einer Netzwerkschicht der SDN-Zielvorrichtung umfasst;
wobei paralleles Berechnen einer Umleitung des ersten Tunnels in Übereinstimmung mit dem Teilreihenfolgen-Steueralgorithmus in Übereinstimmung mit den Bandbreitenressourceninformationen und den Ringsysteminformationen des SDN beinhaltet:
in Übereinstimmung mit einem ersten Ringsystem und allen Eltern-Ringsystemen, zu dem das erste Ringsystem fortschreitet, den Netzwerkschichten der SDN-Vorrichtungen und Bandbreitenressourcennutzung und Tunnelressourcenreservierung von Verbindungen in der getrimmten Netzwerktopologie des SDN, Bestimmen (306) aller nächsten Hops von der SDN-Startvorrichtung zu der SDN-Zielvorrichtung unter Verwendung eines tiefen ersten Suchalgorithmus in Übereinstimmung mit der Netzwerkschichtreihenfolge und der Ringsystemreihenfolge, und Berechnen und Erzeugen der Umleitung des ersten Tunnels.

2. Verfahren nach Anspruch 1, wobei, bevor das Fehlerereignis auf der ersten Verbindung in dem SDN auftritt, das Verfahren weiter umfasst:
in Reaktion auf Starten einer SDN-Steuereinheit, Erzeugen und Speichern der Netzwerktopologieinformationen, Verbindung-Tunnel-Entsprechungsinformationen, der Bandbreitenressourceninformationen und der Ringsysteminformationen des SDN.

3. Verfahren nach Anspruch 2, wobei
die Netzwerktopologieinformationen Informationen der Verbindungen und Verbindungsanschlüsse zwischen allen SDN-Vorrichtungen in dem SDN beinhalten;
die Verbindung-Tunnel-Entsprechungsinformationen die Anzahl und den Status der Tunnel entsprechend jeder der Verbindungen in dem SDN beinhalten;
die Bandbreitenressourceninformationen die Bandbreitenressourcennutzung und die Tunnelressourcenreservierung aller Verbindungen in dem SDN beinhalten.

4. Verfahren nach Anspruch 3, wobei Trimmen der Netzwerktopologie des SDN basierend auf der ersten Verbindung in Übereinstimmung mit den Netzwerktopologieinformationen und den Ringsysteminformationen des SDN beinhaltet:
Bestimmen (305) des ersten Ringsystems, zu dem eine SDN-Startvorrichtung und eine SDN-Zielvorrichtung der ersten Verbindung jeweils gehört, und aller Eltern-Ringsysteme, zu welchen das erste Ringsystem fortschreitet, in Übereinstimmung mit dem progressiven Ringsystemverhältnis, zu dem jede SDN-Vorrichtung gehört, Abschneiden eines Teiles der Netzwerktopologie mit Ausnahme des ersten Ringsystems und aller Eltern-Ringsysteme und Erzeugen der getrimmten Netzwerktopologie des SDN.

5. Verfahren nach Anspruch 1, weiter umfassend:
Erfassen (501) einer Bandbreitenressourcenangemessenheit von Vorrichtungen für die nächsten Hops in Echtzeit beim Bestimmen der nächsten Hops und Versuchen, eine Menge der Bandbreitenressourcen zu reservieren, die von dem ersten Tunnel benötigt werden;
in Reaktion auf eine gelungene Reservierung, erfolgreiches Bestimmen (502) der nächsten Hops bis zur SDN-Zielvorrichtung; und
in Reaktion auf eine fehlgeschlagene Reservierung, erneutes Bestimmen (503) der nächsten Hops in Übereinstimmung mit der Netzwerkschichtreihenfolge, und in Reaktion auf ein fehlgeschlagenes Bestimmen der nächsten Hops aus einer vorherigen Netzwerkschicht, Bestimmen der nächsten Hops aus einer nächsten Netzwerkschicht bis zu der SDN-Zielvorrichtung.

6. Verfahren nach Anspruch 5, weiter umfassend:
in Reaktion auf ein fehlgeschlagenes Finden der nächsten Hops während des Berechnens der Umleitung des ersten Tunnels, Durchführen (504) einer De-Bandbreitenergänzungsberechnung;
wobei Durchführen (504) einer De-Bandbreitenergänzungsberechnung beinhaltet:
Bestimmen der nächsten Hops unter Verwendung eines tiefen ersten Suchalgorithmus direkt in Übereinstimmung mit der Netzwerkschichtreihenfolge und der Ringsystemreihenfolge ohne weitere Berücksichtigung der Bandbreitenressourcennutzung und Tunnelressourcenreservierung der Verbindungen in dem SDN.

7. Verfahren nach Anspruch 1, wobei, bevor das Fehlerereignis auf der ersten Verbindung in dem SDN auftritt, das Verfahren weiter umfasst:
Zwischenspeichern und Aktualisieren (601) in Echtzeit einer Tunnelleitungstabelle für jede der Verbindungen in dem SDN, wobei die Tunnelleitungstabelle Umleitung jeder der Verbindungen von einer SDN-Startvorrichtung zu einer SDN-Zielvorrichtung speichert;
wobei in Reaktion auf ein Auftreten des Fehlerereignisses auf der ersten Verbindung in dem SDN das Verfahren weiter umfasst:
Abfragen (602), ob die Umleitung des ersten Tunnels in der zwischengespeicherten Tunnelleitungstabelle zwischengespeichert ist;
in Reaktion darauf, dass die Umleitung des ersten Tunnels in der zwischengespeicherten Tunnelleitungstabelle zwischengespeichert ist, direktes Verwenden (603) der zwischengespeicherten Umleitung des ersten Tunnels als die Umleitung des ersten Tunnels; und
in Reaktion darauf, dass keine Umleitung des ersten Tunnels in der zwischengespeicherten Tunnelleitungstabelle zwischengespeichert ist, erneutes Durchführen (604) einer Umleitungsberechnung parallel für alle ersten Tunnel auf der ersten Verbindung, die die Umleitungsberechnung benötigen.

8. Vorrichtung zur Umleitungsimplementierung, **dadurch gekennzeichnet, dass** sie einen Speicher (1010) und einen Prozessor (1020) umfasst, wobei der Speicher (1010) ein Programm speichert, das, wenn es von dem Prozessor (1020) gelesen und ausgeführt wird, den Prozessor (1020) veranlasst, ein Verfahren zur Umleitungsimplementierung nach einem der Ansprüche 1 bis 7 durchzuführen.

9. Computerlesbares Speichermedium, **dadurch gekennzeichnet, dass** es ein oder mehrere Programme speichert, die von einem oder mehreren Prozessoren (1020) ausführbar sind, wobei das eine oder die mehreren Programme, wenn sie von dem einen oder den mehreren Prozessoren (1020) ausgeführt werden, den einen oder die mehreren Prozessoren (1020) veranlassen, ein Verfahren zur Umleitungsimplementierung nach einem der Ansprüche 1 bis 7 durchzuführen.

## Revendications

1. Procédé de mise en oeuvre de reroutage, applicable à un dispositif de commande de réseau défini par logiciel, SDN, comprenant:
en réponse à un événement de défaillance se produisant sur une première liaison dans un SDN, effectuer (101) un calcul de reroutage en parallèle pour tous les premiers tunnels sur la première liaison qui nécessitent le calcul de reroutage ;
dans lequel effectuer un calcul de reroutage en parallèle inclut:
couper une topologie de réseau du SDN sur la base de la première liaison selon des informations de topologie de réseau et des informations de système d'anneau du SDN ;
calculer un reroutage de chacun de tous les premiers tunnels en parallèle selon un algorithme de commande d'ordre partiel selon des informations de ressources de bande passante et les informations de système d'anneau du SDN sur la base de la topologie de réseau coupée du SDN ;
dans lequel, avant d'effectuer un calcul de reroutage en parallèle pour tous les premiers tunnels sur la première liaison qui nécessitent le calcul de reroutage, le procédé comprend en outre:
déterminer tous les premiers tunnels sur la première liaison qui nécessitent un calcul de reroutage selon le nombre et le statut de tunnels correspondant à chacune de liaisons dans le SDN ;
dans lequel l'algorithme de commande d'ordre partiel inclut la détermination d'un bond suivant d'une route selon un ordre de couche de réseau et un ordre de système d'anneau, les informations de système d'anneau incluent un système d'anneau auquel chaque dispositif SDN dans des systèmes d'anneau incluant tous les dispositifs SDN dans le SDN appartient, une relation progressive de système d'anneau et une couche de réseau du système d'anneau, dans lequel le système d'anneau se réfère à une structure de système incluant des dispositifs SDN physiquement raccordés les uns aux autres, et chacun des dispositifs SDN appartient à un seul système d'anneau et une couche de réseau, la relation progressive de système d'anneau inclut une relation de mappage depuis les dispositifs SDN jusqu'aux systèmes d'anneau, une relation de mappage depuis les liaisons jusqu'aux systèmes d'anneau, une relation de mappage depuis les dispositifs SDN jusqu'aux couches de réseau et une relation progressive entre des anneaux, les couches de réseau incluent, en ordre croissant, un bord d'accès, une couche d'accès, une couche d'accès de convergence, une couche de convergence, une couche de convergence de noyau, une couche de noyau, un bord de noyau, un tronc provincial et un tronc national ; l'ordre de système d'anneau comprend la détermination de dispositifs SDN dans un même système d'anneau qu'un dispositif SDN de départ et un dispositif SDN de destination d'une liaison défaillante comme des bonds suivants ; et l'ordre de couche de réseau comprend la détermination de dispositifs SDN pour des couches de réseau appropriées comme les bonds suivants selon des positions relatives distales ou proximales compte tenu d'une couche de réseau du dispositif SDN de départ et d'une couche de réseau du dispositif SDN de destination ;
dans lequel calculer un reroutage du premier tunnel en parallèle selon l'algorithme de commande d'ordre partiel selon les informations de ressources de bande passante et les informations de système d'anneau du SDN inclut:
selon un premier système d'anneau et tous les systèmes d'anneau parents vers lesquels le premier système d'anneau progresse, les couches de réseau des dispositifs SDN, et l'utilisation de ressources de bande passante et la réservation de ressources de tunnel de liaisons dans la topologie de réseau coupée du SDN, déterminer (306) tous les bonds suivants depuis le dispositif SDN de départ jusqu'au dispositif SDN de destination en utilisant un premier algorithme de recherche de profondeur selon l'ordre de couche de réseau et l'ordre de système d'anneau, et calculer et générer le reroutage du premier tunnel.

2. Procédé selon la revendication 1, dans lequel, avant l'événement de défaillance se produisant sur la première liaison dans le SDN, le procédé comprend en outre :
en réponse à un dispositif de commande de SDN étant démarré, générer et enregistrer les informations de topologie de réseau, des informations de correspondance de tunnel de liaison, les informations de ressources de bande passante, et les informations de système d'anneau du SDN.

3. Procédé selon la revendication 2, dans lequel
les informations de topologie de réseau incluent des informations des liaisons et des ports de raccordement entre tous les dispositifs SDN dans le SDN ;
les informations de correspondance de tunnel de liaison incluent le nombre et le statut des tunnels correspondant à chacune des liaisons dans le SDN ;
les informations de ressources de bande passante incluent l'utilisation de ressources de bande passante et la réservation de ressources de tunnel de toutes les liaisons dans le SDN.

4. Procédé selon la revendication 3, dans lequel couper une topologie de réseau du SDN sur la base de la première liaison selon les informations de topologie de réseau et les informations de système d'anneau du SDN inclut:
déterminer (305) le premier système d'anneau auquel un dispositif SDN de départ et un dispositif SDN de destination de la première liaison appartiennent chacun et tous les systèmes d'anneau parents vers lesquels le premier système d'anneau progresse selon la relation progressive de système d'anneau à laquelle chaque dispositif SDN appartient, couper une partie de la topologie de réseau à l'exception du premier système d'anneau et de tous les systèmes d'anneau parents, et générer la topologie de réseau coupée du SDN.

5. Procédé selon la revendication 1, comprenant en outre:
détecter (501) une adéquation de ressources de bande passante de dispositifs pour les bonds suivants en temps réel lors de la détermination des bonds suivants, et tenter une réservation d'une quantité de ressources de bande passante requise par le premier tunnel ;
en réponse au succès d'une réservation, déterminer avec succès (502) les bonds suivants jusqu'au dispositif SDN de destination ; et
en réponse à l'échec d'une réservation, déterminer à nouveau (503) les bonds suivants selon l'ordre de couche de réseau, et en réponse à l'échec de la détermination des bonds suivants à partir d'une couche de réseau précédente, déterminer les bonds suivants à partir d'une couche de réseau suivante jusqu'au dispositif SDN de destination.

6. Procédé selon la revendication 5, comprenant en outre :
en réponse à l'échec de la recherche des bonds suivants durant le calcul du reroutage du premier tunnel, effectuer (504) un calcul supplémentaire de bande passante ;
dans lequel effectuer (504) un calcul supplémentaire de bande passante inclut:
déterminer les bonds suivants en utilisant le premier algorithme de recherche de profondeur directement selon l'ordre de couche de réseau et l'ordre de système d'anneau en ne tenant plus compte de l'utilisation de ressources de bande passante et d'une réservation de ressources de tunnel des liaisons dans le SDN.

7. Procédé selon la revendication 1, dans lequel, avant l'événement de défaillance se produisant sur la première liaison dans le SDN, le procédé comprend en outre:
mettre en cache et mettre à jour (601) en temps réel une table de routage de tunnel pour chacune des liaisons dans le SDN, dans lequel la table de routage de tunnel stocke le reroutage de chacune des liaisons depuis un dispositif SDN de départ jusqu'à un dispositif SDN de destination ;
dans lequel, en réponse à l'événement de défaillance se produisant sur la première liaison dans le SDN, le procédé comprend en outre:
demander (602) si le reroutage du premier tunnel est mis en cache dans la table de routage de tunnel mise en cache ;
en réponse au reroutage du premier tunnel étant mis en cache dans la table de routage de tunnel mise en cache, utiliser (603) directement le reroutage mis en cache du premier tunnel comme le reroutage du premier tunnel ; et
en réponse au fait qu'aucun reroutage du premier tunnel n'ait été mis en cache dans la table de routage de tunnel mise en cache, effectuer à nouveau (604) un calcul de reroutage en parallèle pour tous les premiers tunnels sur la première liaison qui nécessitent le calcul de reroutage.

8. Dispositif de mise en oeuvre de reroutage, **caractérisé en ce qu'**il comprend une mémoire (1010) et un processeur (1020), dans lequel la mémoire (1010) stocke un programme amenant, lorsqu'il est lu et exécuté par le processeur (1020), le processeur (1020) à effectuer un procédé de mise en oeuvre de reroutage selon l'une quelconque des revendications 1 à 7.

9. Support de stockage lisible par ordinateur, **caractérisé en ce qu'**il stocke un ou plusieurs programmes exécutables par un ou plusieurs processeurs (1020), dans lequel les un ou plusieurs programmes, lorsqu'ils sont exécutés par les un ou plusieurs processeurs (1020), amènent les un ou plusieurs processeurs (1020) à effectuer un procédé de mise en oeuvre de reroutage selon l'une quelconque des revendications 1 à 7.
